# EUROPÄISCHE PATENTANMELDUNG

(11) **EP 0 548 481 A1**
(43) Veröffentlichungstag der Anmeldung: **30.06.1993**
(21) Anmeldenummer: 92117366.2
(22) Anmeldetag: 10.10.1992
(51) Int. Cl.: C01B 3/16, C10K 3/04, B01J 23/72

(54) **Verwendung von Kupferoxid-Aluminiumoxid-Magnesiumoxid-Katalysatoren zur Konvertierung von Kohlenmonoxid**

(30) Priorität: 23.12.1991 DE 4142900
(71) Anmelder: SÜD-CHEMIE AG, D-80333 München (DE)
(72) Erfinder: Schneider, Michael, Dr., W-8012 Ottobrunn (DE); Kochloefl, Karl, Dr., W-8206 Bruckmühl/Heufeld (DE); Maletz, Gerd, Dr., W-8206 Bruckmühl (DE)
(74) Vertreter: Patentanwälte Dipl.-Ing. R. Splanemann Dr. B. Reitzner Dipl.-Ing. K. Baronetzky

(57) **Zusammenfassung**

Beschrieben wird die Verwendung eines Katalysators, der durch folgende Merkmale (vor der reduktiven Aktivierung) gekennzeichnet ist:
a) Die chemische Zusammensetzung entspricht der Formel

   Cu_{0,04-6}AlMg_{0,1-10}Oₓ,

   wobei x die zur Aufrechterhaltung der Elektroneutralität pro Formeleinheit erforderliche Anzahl Sauerstoffatome bezeichnet;
b) das Intensitätsverhältnis zwischen den Röntgenbeugungslinien der Spinelle CuAl₂0₄ und MgAl₂0₄ bei d=0.244 nm und des Kupferoxids bei d=0,232 nm, bestimmt als das Verhältnis der Reflexhöhen, beträgt 0,05 bis 0,5;
zur Konvertierung von Kohlenmonoxid.

## Beschreibung

Die Erfindung betrifft die Verwendung von bestimmten Kupferoxid-Aluminiumoxid-Magnesiumoxid-Katalysatoren zur Konvertierung von Kohlenmonoxid.

Synthesegas stellt bekanntlich eines der wichtigsten Basisprodukte der industriellen Chemie dar. Es dient zur Synthese von Grundchemikalien, wie Methanol, oder Oxoaldehyden und nicht zuletzt zur Herstellung von reinem Wasserstoff.

Das etwa durch Dampfreformierung von Kohlenwasserstoffen erzeugte Synthesegas entspricht hinsichtlich des CO/H₂-Verhältnisses in der Regel nicht den Anforderungen für die weitere Verwendung. Es ist daher großtechnische Praxis, den Gehalt an CO durch Umsetzung mit Wasserdampf zu verringern.

Diese Konvertierungsreakion wird normalerweise katalytisch in zwei Stufen durchgeführt, wobei in der ersten Stufe chrompromotierte Eisenkatalysatoren bei Temperaturen oberhalb etwa 350°C zur Verringerung des CO-Gehalts auf etwa 3-4 % verwendet werden (vergl. z.B. D.S. Newsome, Catal. Rev. 21 (1980), 275).

Wie aus der Literatur (vergl. z.B H. Topsoe and M. Boudart, J. Catal. 31 (1973), 346) bekannt ist, vereinigt der Chromoxidpromotor zwei Funktionen. Er dient zum einen zur Verbesserung der katalytischen Aktivität, zum anderen wirkt er als Thermostabilisator, d.h. er erhöht die thermische Stabilität des Magnetits, der aktiven Form des Katalysators, und vermeidet eine allzu schnelle Desaktivierung unter den Bedingungen der technischen Anwendung.

Leider muß bei der Verwendung von Chrom, insbesondere in sechswertiger Form, sowohl bei der Produktion als auch bei der späteren Handhabung des Katalysators ein nicht zu unterschätzender Aufwand zur Gewährleistung der Arbeitssicherheit getrieben werden, und es läßt sich wohl trotz großer Anstrengungen eine Gesundheitsgefährdung nicht vollständig ausschließen. Zudem stellt schließlich auch der gebrauchte Katalysator eine Gefährdung für Mensch und Umwelt dar und muß unter Beachtung der für giftigen Sondermüll gültigen Bestimmungen entsorgt werden.

Insbesondere bei der Herstellung von reinem Wasserstoff ist es erforderlich, den CO-Gehalt von Synthesegasen weiter zu erniedrigen. Zu diesem Zweck führt man das Produkt einer zweiten Konvertierungsstufe bei wesentlich niedrigerer Temperatur und damit günstigerer Gleichgewichtslage zu. Standardkatalysatoren für diesen Konvertierungsschritt basieren auf Cu-Zn-Oxid.

Dieser Katalysatortyp ist zwar frei von umweltschädlichen Bestandteilen, er ist jedoch mit dem großen Nachteil einer ausgesprochen niedrigen Thermostabilität behaftet, so daß sich seine Anwendung im wesentlichen auf Temperaturen unterhalb etwa 250°C beschränkt.

Die EP-B-0 296 734 beschreibt Katalysatoren zur Konvertierung von Kohlenmonoxid auf der Basis von Kupferoxid und Verbindungen des Zinks und/oder des Magnesiums, gegebenenfalls mit Zusaätzen von Aluminiumoxid und anderen Oxiden. Die Vorstufen der Katalysatoren werden auf Temperaturen von höchstens 200°C erhitzt, d.h. es findet keine Spinellbindung statt, die eine thermische Stabilisierung der aktiven Komponente Kupfer bewirkt.

Aufgabe der vorliegenden Erfindung war es nun, für ein Verfahren zur Konvertierung von Kohlenmonoxid einen Katalysator zu finden, der auf der einen Seite keinerlei für Mensch und Umwelt schädliche Bestandteile enthält und der auf der anderen Seite eine wesentlich höhere Thermostabilität als herkömmliche Konvertierungskatalysatoren besitzt.

Diese Aufgabe konnte überraschenderweise gelöst werden durch die Verwendung eines Katalysators, der durch folgende Merkmale (vor der reduktiven Aktivierung) gekennzeichnet ist:
a) Die chemische Zusammensetzung entspricht der Formel

   Cu_{0,04-6}Al Mg_{0,1-10}Oₓ

   wobei x die zur Aufrechterhaltung der Elektroneutralität pro Formeleinheit erforderliche Anzahl Sauerstoffatome bezeichnet;
b) das Intensitätsverhältnis zwischen den Röntgenbeugungslinien der Spinelle CuAl₂0₄ und MgAl₂0₄ bei d=0,244 nm und des Kupferoxids bei d=0,232 nm, bestimmt als das Verhältnis der Reflexhöhen, beträgt 0,05 bis 0,5.

Die chemische Zusammensetzung vor der reduktiven Aktivierung entspricht vorzugsweise der Formel

Cu_{0,1-2}Al Mg_{0,3-3}Oₓ.

Die BET-Oberfläche des oxidischen Katalysators beträgt mindestens 50 m²/g, vorzugsweise mindestens 80m²/g. Die BET-Oberfläche wird durch N₂-Adsorption nach der Einpunkt-Methode bestimmt, wie es in DIN 66 132 beschrieben ist.

Vorzugsweise beträgt das mittels Hg-Porosimetrie bestimmbare spezifische Porenvolumen des oxidischen Katalysators mindestens 0,3 cm³/g, vorzugsweise mindestens 0,4 cm³/g.

Das spezifische Porenvolumen wird nach der Methode der Quecksilberpenetration bestimmt, die bei J. van Brakel et al., Powder Technology 29 (1981), 1 beschrieben ist. Bei dieser Methode wird das Quecksilber bis zu einem Druck von etwa 2000 bar in die Katalysator-Formkörper eingepreßt, wobei die Volumenabnahme des Quecksilbers als Funktion des Druckes aufgetragen wird. Auf diese Weise erhält man eine Kurve, aus deren Verlauf sich auch die Porenverteilung ermitteln läßt. Nach der Quecksilberpenetrationsmethode kann nur das Volumen und die Verteilung der Poren mit einem Durchmesser von > 7,5 nm bestimmt werden.

Die Herstellung der erfindungsgemäß verwendeten Katalysatoren kann grundsätzlich nach allen bekannten Verfahren erfolgen, die eine für die katalytische Anwendung ausreichende intensive Vermischung der Komponenten gewährleisteten. So ist es z.B. möglich, die entsprechenden Oxide in fein verteilter Form miteinander zu vermahlen. Vorteilhafter ist es jedoch, die oxidische Form durch thermische Behandlung von in Oxide überführbaren Zwischenstufen zu erhalten, wobei die thermische Behandlung vorzugsweise bei einer Temperatur von mindestens 450°C, insbesondere bei 550 bis 650°C, durchgeführt wird. Die Zwischenstufen werden durch eine gleichzeitige oder nacheinander durchgeführte Fällung der Katalysatorkomponenten erhalten, worauf die Zwischenstufen durch thermische Behandlung in die Oxidform übergeführt werden, die anschließend reduziert wird. Bei der thermischen Behandlung bilden sich aus den Oxiden zum Teil die Spinelle CuAl₂O₄ und MgAl₂O₄. Die vorliegenden Ergebnisse deuten darauf hin, daß für eine ausreichende thermische Stabilität ein ausgewogenes Verhältnis zwischen nicht umgewandeltem Kupferoxid und Spinell wichtig zu sein scheint.

Vorzugsweise liegen die Katalysator-Zwischenstufen vor der Umwandlung in die Oxide als Hydroxide, Hydroxocarbonate oder Carbonate vor.

Eine bevorzugte Präparationsmethode stellt die Fällungsreakion dar, bei der man zur thermischen Überführung in die Oxide geeignete Zwischenstufen aus der Lösung ihrer Salze in Form unlöslicher Niederschläge abscheidet.

Als Rohstoffe eignen sich alle löslichen Salze wie z.B. Halogenide, Sulfate oder Nitrate. Als Fällungsmittel kommen vor allem Alkalicarbonate und Ammonium(bi)-carbonat in Betracht.

Eine besonders bevorzugte Ausführungsform sieht die separate Fällung eines Magnesiumhydroxidniederschlags, beispielsweise mit Ammoniak vor, der dann mit Kupfer und Aluminium enthaltenden Zwischenstufen vermischt und anschließend einer thermischen Behandlung und einer Reduktion unterzogen wird.

Die thermische Behandlung oder Calcinierung kann sowohl statisch, z.B. in Hordenöfen, als auch dynamisch, etwa im Drehrohrofen, erfolgen. Temperaturen und Verweilzeiten werden im Einzelfall ermittelt. Kriterium für die Auswahl der Calcinierparameter ist das Intensitätsverhältnis zwischen den Röntgenbeugungslinien der Spinelle CuAl₂0₄ und MgAl₂O₄ bei d=0.244 nm und des Kupferoxids bei d=0,232 nm, welches 0,05 bis 0,5 betragen sollte. Die Mindestcalciniertemperatur beträgt 450°C.

Zur Verformung der erfindungsgemäß verwendeten Katalysatormassen können bekannte Verfahren herangezogen werden. Bevorzugte Verformungsmethoden sind Tablettieren und Strangpressen, wobei sich die Verwendung von anorganischen oder organischen Hilfsstoffen in der Funktion von Gleitmitteln oder zur Verbesserung der Plastizität beim Strangpressen empfiehlt. Die Verformung kann sowohl vor als auch nach der Calcinierung vorgenommen werden.

Die erfindungsgemäß verwendeten Katalysatoren liegen vorzugsweise als Formkörper vor, insbesondere in Form von Kugeln, Tabletten, Ringen oder Strangpreßlingen, wobei vor allem letztere als Voll- oder Hohlkörper ausgebildet sind, um eine hohe geometrische Oberfläche bei gleichzeitig niedrigem Strömungswiderstand zu erzielen. Besonders bevorzugte Formkörper sind Wabenkörper.

Der erfindungsgemäß verwendete Katalysator wird vorzugsweise bei einem Verfahren eingesetzt, bei dem Kohlenmonoxid und Wasser im Temperaturbereich zwischen 150 und 450°C, vorzugsweise im Temperaturbereich zwischen 250 bis 400°C in Kohlendioxid und Wasser konvertiert werden.

Die folgenden Beispiele beschreiben die Herstellung und Anwendung des erfindungsgemäß verwendeten Katalysators:

### Beispiel 1

Man löst 3750g Al(NO₃)₃*9H₂O und 1812g Cu(NO₃)₂*3H₂O in entsalztem Wasser auf ein Gesamtvolumen von 10 Liter und erhitzt die Lösung auf 50°C (Lösung I). Weiterhin stellt man eine 1.5 molare Sodalösung her und erhitzt diese ebenfalls auf 50°C (Lösung II). Mittels Schlauchpumpen fördert man beide Lösungen unter Rühren in einen thermostatisierten Fällbehälter. Die Dosierrate von Lösung I beträgt 167 ml/min. Lösung II wird so dosiert, daß der pH-Wert im Fällbehälter ständig 6 ± - 0.2 beträgt. Die Temperatur wird auf 50°C eingestellt. Der Niederschlag wird filtriert und gewaschen, bis der Natriumgehalt 500 ppm, bezogen auf Glühverlust 600°C, beträgt.

1280 g Mg(NO₃)₂*6H₂O werden auf 10 Liter Gesamtvolumen gelöst. Durch Zugabe von konzentriertem Ammoniak wird das enthaltene Magnesium nahezu quantitiv gefällt. Man wäscht zweimal mit jeweils 10 Liter H₂O.

Die beiden Filterkuchen werden in einem Eirich-Mischer intensiv gemischt, die Mischung wird anschließend bei 120 °C über Nacht getrocknet und wie folgt calciniert:

Man heizt mit 2°/min auf 600°C und beläßt es 4 h bei dieser Temperatur. Die calcinierte Katalysatormasse wird bei einer Maschenweite von 1 mm siebgranuliert und unter Zusatz von 2% synthetischem Graphit auf eine mittlere Seitendruckfestigkeit von 80 N zu zylindrischen Tabletten (Durchmesser 4.5 mm, Höhe 4.5 mm) verpreßt. Der Kupfergehalt beträgt 39.5 %, die BET-Oberfläche 119 m²/g und das Porenvolumen 0.60 cm³/g. Das Intensitätsverhältnis zwischen den Röntgenbeugungslinien der Spinelle CuAl₂O₄ und MgAl₂O₄ bei d= 0,244 nm und des Kupferoxids bei d=0,232 nm beträgt 0,25.

### Beispiel A (Vergleichsbeispiel)

Man geht bei der Präparation vor, wie im Beispiel 1 beschrieben, führt aber die Calcinierung bei 800°C durch.

Das Röntgenbeugungsdiagramm zeigt ein Intensitätsverhältnis zwischen den Reflexen der Spinelle CuAl₂O₄ und MgAl₂O₄ bei d=0.244 nm und des Kupferoxids bei d= 0.232 nm, bestimmt als Verhältnis der Reflexhöhen, von 0,63. Der Katalysator liegt also nicht im Bereich der Erfindung. Die BET-Oberfläche beträgt 40 m²/g, das Porenvolumen 0.34 cm³/g.

### Beispiel B (Vergleichsbeispiel)

Man geht bei der Präparation vor, wie im Beispiel 1 beschrieben, führt aber die Calcinierung bei 400 °C durch. Es wird kein Spinell beobachtet.

### Beispiel C (Vergleichsbeispiel)

Man löst 3750g Al(NO₃)₃*9H₂O sowie 2416g Cu(NO₃)₂*3H₂O auf ein Gesamtvolumen von 10 Liter und führt wie im Beispiel 1 beschrieben, eine Fällung mit 1.5 molarer Sodalösung bei 50 °C und pH 6 ± 0.2 durch. Der Filterkuchen wird gewaschen und im Unterschied zu Beispiel 1 ohne Zumischung einer Magnesiumhydroxidzwischenstufe getrocknet und bei 600 °C calciniert. Die calcinierte Katalysatormasse wird ebenfalls wie in Beispiel 1 beschrieben tablettiert. Der Kupfergehalt beträgt 52 %, die BET-Oberfläche 63 m ²/g und das Porenvolumen 0.63 cm³/g. Da der Katalysator kein Magnesium enthält, handelt es sich hier nicht um ein erfindungsgemäßes Ausführungsbeispiel.

Die Wirksamkeit der Katalysatoren hinsichtlich der Umsetzung von Kohlenmonoxid mit Wasserdampf wurde demonstriert, indem ein Gasgemisch, bestehend aus 12 % CO, 10 % CO₂, und 78 % Wasserstoff nach Einbringen von Wasserdampf im Volumenverhältnis Dampf/Gas = 0.5 durch ein elektrisch beheiztes Reaktorrohr geleitet wurde, das den Katalysator als Schüttgut enthielt. Zuvor wurde der Katalysator durch Überleiten einer Mischung aus Wasserstoff und Wasserdampf bei Reaktionstemperatur in die aktive Form überführt. Der Reaktor wurde unter weitgehend isothermen Bedingungen betrieben, indem alternierend je eine Schicht (5 ml) Katalysator und Inertmaterial (α-Al₂O₃) gleicher Tablettengröße angeordnet wurde.

Die CO-Konzentration im Gasgemisch wurde vor und nach Passieren der Katalysatorschüttgutschicht gaschromatographisch analysiert. Zur Versuchsauswertung dienen die Beziehungen:

Xₑₓ = C^{E} - C^{A}/C^{E}

ETA-CO = Xₑₓ/Xₜₕ

Dabei bedeuten:
Xₑₓ den experimentell ermittelten CO-Umsatz
Xₜₕ den Gleichgewichtsumsatz bei der entsprechenden Reaktionstemperatur
C^{E} die CO-Eingangskonzentration
C^{A} die volumenkorrigierte CO-Ausgangskonzentration
ETA-CO den auf den Gleichgewichtsumsatz bei der entsprechenden Temperatur normierten CO-Umsatz
Es wurden folgende Reaktionsbedingungen eingestellt:

| | |
|---|---|
| Gesamtdruck | 20 bar |
| Temperatur | 270°C/310°C |
| Raumgeschwindigkeit | 20 000 Liter/Liter*h |

Nach Abschluß dieses ersten Testzyklus wurde die Temperatur des Reaktors auf 400°C erhöht, und die Katalysatoren wurden 15 Stunden bei dieser Temperatur gealtert. Anschließend wurde ein zweiter Meßzyklus unter Bedingungen, die dem ersten Zyklus entsprechen, durchgeführt.

Tabelle I faßt die Testergebnisse zusammen.

**Tabelle I**

| Testergebnisse | | | |
|---|---|---|---|
| Katalysator | T (°C) | 1.Zyklus ETA-CO | 2.Zyklus ETA-CO |
| Beispiel 1 | 270 | 0.86 | 0.86 |
| | 310 | 0.95 | 0.94 |
| Beispiel A (Vergleich) | 270 | 0.81 | 0.74 |
| | 310 | 0.91 | 0.86 |
| Beispiel B (Vergleich) | 270 | 0.89 | 0.83 |
| | 310 | 0.95 | 0.91 |
| Beispiel C (Vergleich) | 270 | 0.87 | 0.78 |
| | 310 | 0.95 | 0.86 |

Man sieht, daß nur der erfindungsgemäße Katalysator nach Beispiel 1 hohe Anfangsaktivität mit hoher Thermostabilität kombiniert. Dieser Katalysator ist Magnesium-promotiert, bei einer Temperatur oberhalb 450°C calciniert und weist ein Intensitätsverhältnis zwischen den Röntgenbeugungslinien der Spinelle CuAl₂O₄ und MgAl₂O₄ bei d=0,244 nm und des Kupferoxids bei d=0.232 nm von 0,25 auf. Der ETA-CO Wert bleibt nach der Alterung nahezu unverändert.

Der Katalysator nach Beispiel A weist ein Intensitätsverhältnis zwischen den Röntgenbeugungslinien der Spinelle CuAl₂O₄ und MgAl₂O₄ bei d=0.244 nm und des Kupferoxids bei d=0.232 von 0.63 auf und liegt damit nicht im Bereich der Erfindung. Obwohl er die gleiche Zusammensetzung wie der Katalysator nach Beispiel 1 besitzt, nimmt seine Aktivität im 2. Zyklus deutlich ab.

Der Katalysator nach Vergleichsbeispiel B weist ebenfalls die gleiche chemische Zusammensetzung wie der erfindungsgemäße Katalysator nach Beispiel 1 auf, wurde jedoch bei zu niedriger Temperatur, nämlich bei 400°C calciniert, was offenbar zu einer nur unzureichenden Stabilisierung führt, denn die Anfangsaktivität dieses Katalysators ist bei hoher Reaktionstemperatur genauso hoch wie die des erfindungsgemäßen Katalysators und übertrifft diese sogar bei niedriger Reaktionstemperatur. Nach der thermischen Alterung ist seine Aktivität allerdings deutlich herabgesetzt.

Im Falle des Katalysators nach Beispiel C schließlich liegt zwar das Intensitätsverhältnis der genannten Röntgenbeugungslinien im erfindungsgemäßen Bereich, der Katalysator ist aber nicht Magnesium-promotiert und somit nicht Gegenstand der vorliegenden Efindung. Obwohl sein Gehalt an aktiver Komponente Kupfer deutlich höher ist als der Gehalt des erfindungsgemäßen Katalysators nach Beispiel 1, ist seine Anfangsaktivität nicht höher als die des erfindungsgemäßen Katalysators, und er wird ebenso wie die Vergleichskatalysatoren der Beispiele A und B signifikant desaktiviert.

## Patentansprüche

1. Verwendung eines Katalysators, der durch folgende Merkmale (vor der reduktiven Aktivierung) gekennzeichnet ist:
a) Die chemische Zusammensetzung entspricht der Formel
Cu_{0,04-6}AlMg_{0,1-10}Oₓ ,
wobei x die zur Aufrechterhaltung der Elektroneutralität pro Formeleinheit erforderliche Anzahl Sauerstoffatome bezeichnet;
b) das Intensitätsverhältnis zwischen den Röntgenbeugungslinien der Spinelle CuAl₂0₄ und MgAl₂0₄ bei d=0.244 nm und des Kupferoxids bei d=0,232 nm, bestimmt als das Verhältnis der Reflexhöhen, beträgt 0,05 bis 0,5;
zur Konvertierung von Kohlenmonoxid.

2. Verwendung nach Anspruch 1, dadurch gekennzeichnet, daß die chemische Zusammensetzung des Katalysators vor der reduktiven Aktivierung der Formel
Cu_{0,1-2}AlMg_{0,3-3}Oₓ
entspricht.

3. Verwendung nach Anspruch 1 oder 2, dadurch gekennzeichnet, daß die BET-Oberfläche des oxidischen Katalysators mindestens 50 m²/g, vorzugsweise mindestens 80 m²/g beträgt.

4. Verwendung nach einem der Ansprüche 1 bis 3, dadurch gekennzeichnet, daß das mittels Hg-Porosimetrie bestimmbare Porenvolumen des oxidischen Katalysators mindestens 0,3 cm³/g, vorzugsweise mindestens 0,4 cm³/g beträgt.

5. Verwendung nach einem der Ansprüche 1 bis 4, dadurch gekennzeichnet, daß der Katalysator durch gleichzeitige oder nacheinander durchgeführte Fällung von Zwischenstufen, die durch thermische Behandlung in die Oxidform überführbar sind, und anschließende Reduktion erhältlich ist.

6. Verwendung nach einem der Ansprüche 1 bis 5, dadurch gekennzeichnet, daß die Katalysator-Zwischenstufen als Hydroxide, Hydroxocarbonate oder Carbonate vorliegen.

7. Verwendung nach einem der Ansprüche 1 bis 6, dadurch gekennzeichnet, daß der Katalysator durch separate Fällung des Magnesiumhydroxids, Vermischung mit den Kupfer und Aluminium enthaltenden Zwischenstufen und anschließende thermische Behandlung und Reduktion erhältlich ist.

8. Verwendung nach einem der Ansprüche 1 bis 7, dadurch gekennzeichnet, daß der Katalysator als Formkörper vorliegt, insbesondere in Form von Kugeln, Tabletten, Ringen oder Strangpreßlingen, wobei insbesondere die letzteren als Voll- oder Hohlkörper ausgeführt sind.

9. Verwendung nach einem der Ansprüche 1 bis 8, dadurch gekennzneichnet, daß Kohlenmonoxid und Waser im Temperaturbereich zwischen 150 und 450 °C, vorzugsweise im Temperaturbereich zwischen 250 bis 400°C in Kohlendioxid und Wasser konvertiert werden.
